# EUROPÄISCHE PATENTANMELDUNG

(11) **EP 3 179 060 A1**
(43) Veröffentlichungstag der Anmeldung: **14.06.2017**
(21) Anmeldenummer: 16199474.4
(22) Anmeldetag: 18.11.2016
(51) Int. Cl.: F01L 1/053, F02F 7/00, F01L 1/02

(54) **ZYLINDERKOPFHAUBE**

(30) Priorität: 07.12.2015 DE 102015224440
(71) Anmelder: Mahle International GmbH, 70376 Stuttgart (DE)
(72) Erfinder: CUTRONA, Roberto, 71522 Backnang (DE); FLENDER, Thomas, 71735 Eberdingen (DE); KREISIG, Michael, 70839 Gerlingen (DE)
(74) Vertreter: BRP Renaud & Partner mbB Rechtsanwälte Patentanwälte Steuerberater

(57) **Zusammenfassung**

Die Erfindung betrifft ein Verfahren zur Herstellung einer Zylinderkopfhaube (1), bei dem
- zumindest zwei metallische Lagerbrücken (2) zum Lagern zumindest einer Nockenwelle (3) bereitgestellt und zueinander ausgerichtet werden,
- zumindest ein metallisches Verbindungselement (4) fest mit den zumindest zwei Lagerbrücken (2) verbunden wird, so dass die ausgerichteten Lagerbrücken (2) in ausgerichtetem Zustand zueinander fixiert sind,
- die zumindest zwei Lagerbrücken (2) und das zumindest eine Verbindungselement (4) zumindest teilweise mit Kunststoff (5) umspritzt und dadurch die Zylinderkopfhaube (1) hergestellt wird.

Hierdurch lässt sich die Zylinderkopfhaube (1) flexibel herstellen.

## Beschreibung

Die vorliegende Erfindung betrifft ein Verfahren zur Herstellung einer Zylinderkopfhaube. Die Erfindung betrifft außerdem eine nach einem solchen Verfahren hergestellte Zylinderkopfhaube.

Zylinderkopfhauben bilden üblicherweise einen oberen Abschluss eines Zylinderkopfes und beinhalten oftmals auch Lagerbrücken zur Lagerung von zumindest einer Nockenwelle einer Brennkraftmaschine.

Aus der DE 10 2014 106 561 A1 ist eine Zylinderkopfhaube zur Anordnung auf einem Zylinderkopf einer Brennkraftmaschine mit einem Haubenkörper aus Kunststoff und mit wenigstens einer Lagerbrücke, umfassend einen Metallwerkstoff zur drehbaren Aufnahme wenigstens einer Nockenwelle in der Zylinderkopfhaube bekannt. Dabei ist vorgesehen, dass die Lagerbrücke durch eine Fügeverbindung am Haubenkörper derart genau gelagert ist, dass diese für die Anordnung am Zylinderkopf durch den Haubenkörper ausgerichtet ist.

Aus der DE 10 2007 063 257 A1 ist eine Lagereinrichtung zur Lagerung einer Nockenwelle in einem Zylinderkopf bekannt, welche wenigstens eine Rastkontur aufweist, die derart mit wenigstens einer an einer Zylinderkopfhaube ausgebildeten Gegenrastkontur verbindbar, dass die Zylinderkopfhaube über die Lagereinrichtung dicht gegen den Zylinderkopf verspannbar ist. Hierdurch soll insbesondere eine einfache und montagefreundliche Befestigung der Zylinderkopfhaube am Zylinderkopf erreicht werden können.

Aus der DE 103 31 089 A1 ist eine Zylinderkopfhaube für eine Brennkraftmaschine mit wenigstens einer Nockenwelle bekannt, die durch wenigstens eine Lagerbrücke entlang einer Lagergasse für die Nockenwelle in der Zylinderkopfhaube hindurch ragt, wobei die Lagerbrücke eine Öffnung bzw. Bohrung besitzt, die die Nockenwelle vollständig umschließt.

Aus der EP 1 884 629 B1 ist eine Zylinderkopfhaube für eine Brennkraftmaschine bekannt, mit einem Gehäuse, das dichtend mit dem Zylinderkopf verbindbar ist, und das über mindestens eine Aufnahme mit einer Passung für ein Funktionsbauteil verfügt, wobei das Gehäuse aus einem Thermoplast gebildet und die Aufnahme in ein Aufnahmeteil aus Metall integriert ist.

Nachteilig bei aus dem Stand der Technik bekannten Zylinderkopfhauben ist oftmals deren vergleichsweise aufwendige und wenig flexible Fertigung.

Die vorliegende Erfindung beschäftigt sich daher mit dem Problem, ein Verfahren anzugeben, mittels welchem eine Zylinderkopfhaube einfach, kostengünstig und dennoch flexibel herstellbar ist.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, unbedingt erforderliche metallische Lagerelemente, wie bspw. Lagerbrücken zur Lagerung von zumindest einer Nockenwelle, über ebenfalls metallische Verbindungselemente miteinander zu verbinden und dadurch zueinander auszurichten und anschließend diesen Lagerrahmen in einem Kunststoffspritzgießwerkzeug zumindest teilweise mit Kunststoff zu umspritzen und dabei die Zylinderkopfhaube herzustellen. Das erfindungsgemäße Verfahren zur Herstellung einer Zylinderkopfhaube weist dabei zumindest folgende Verfahrensschritte auf: Zunächst werden zumindest zwei metallische Lagerbrücken zur Lagerung zumindest einer Nockenwelle bereitgestellt und zueinander ausgerichtet. Anschließend wird zumindest ein metallisches Verbindungselement fest mit den zumindest zwei Lagerbrücken verbunden, wodurch die ausgerichteten Lagerbrücken zueinander bzw. aneinander fixiert werden und dadurch ein vergleichsweise steifer Lagerrahmen geschaffen wird. Dieser Lagerrahmen bestehend aus den zumindest zwei Lagerbrücken und dem zumindest einen Verbindungselement wird nun zumindest teilweise mit Kunststoff umspritzt, bspw. in einem Kunststoffspritzgießwerkzeug, und dadurch die Zylinderkopfhaube hergestellt. Durch eine entsprechende Kavität eines Spritzgießwerkzeugs können dabei unterschiedlichste Formen von Zylinderkopfhauben mit ein und demselben Lagerrahmen geschaffen werden, wodurch insbesondere vergleichsweise flexibel auf unterschiedliche Kundenanforderungen hinsichtlich bspw. von Außenabmessung und/oder Dichtkonturen reagiert werden kann. Mit dem erfindungsgemäßen Verfahren lässt sich so eine montagefertige und zugleich abgedichtete Zylinderkopfhaube vergleichsweise einfach, kostengünstig und flexibel bereitstellen, wobei zudem nahezu sämtliche Anforderungen an die Optik, bspw. Abschluss eines Zylinderkopfes nach oben mit einem entsprechenden Logo, berücksichtigt werden können. Hierzu muss lediglich das Spritzgießwerkzeug entsprechend angepasst bzw. modifiziert werden.

Bei einer vorteilhaften Weiterbildung der erfindungsgemäßen Lösung wird das zumindest eine Verbindungselement mit einer jeweiligen Außenfläche der zumindest zwei Lagerbrücken verbunden. Hierdurch kann insbesondere eine flächige und damit besonders steife Verbindung zwischen dem zumindest einen Verbindungselement und den zumindest zwei Lagerbrücken erreicht werden, wodurch ein insgesamt vergleichsweise steifer Lagerrahmen hergestellt werden kann.

Zweckmäßig werden das zumindest eine Verbindungselement und die zumindest zwei Lagerbrücken miteinander verschweißt, verlötet, verschraubt, vernietet oder verklebt. Zusätzlich oder alternativ ist auch eine Formschlussverbindung zwischen den genannten Elementen denkbar. Ebenso vorstellbar sind selbstverständlich auch Bolzenverbindungen oder Verbindungen über entsprechende Zapfen. Bereits diese nicht abschließende Aufzählung lässt erahnen, welch mannigfaltige Verbindungs- bzw. Fixierungsmöglichkeiten zwischen dem zumindest einen Verbindungselement und den zumindest zwei Lagerbrücken vorhanden sind.

Bei einer vorteilhaften Weiterbildung der erfindungsgemäßen Lösung wird in das zumindest eine Verbindungselement zumindest eine Öffnung, insbesondere eine Öleinfüllöffnung oder eine Einschrauböffnung zum Befestigen von Anbauaggregaten, eingebracht. Durch das Vorsehen bzw. Einbringen zumindest einer solchen Öffnung können individuelle Befestigungsoptionen vergleichsweise einfach realisiert werden. Zudem wird durch das Einbringen einer derartigen Öffnung eine Gewichtsreduzierung erreicht, wodurch die Zylinderkopfhaube insgesamt leichter ausgebildet werden kann, was langfristig zu einer Reduzierung des Kraftstoffverbrauchs und zu einer Reduzierung der Schadstoffemissionen führt.

Die vorliegende Erfindung beruht weiter auf dem allgemeinen Gedanken, eine Zylinderkopfhaube entsprechend dem vorgenannten Verfahren herzustellen, wodurch diese nicht nur kostengünstig, sondern zudem auch flexibel hergestellt werden kann.

Bei einer vorteilhaften Weiterbildung der erfindungsgemäßen Zylinderkopfhaube weist das zumindest eine Verbindungselement zumindest zwei zueinander abgewinkelte Flächen auf, die einen jeweiligen Lagerrücken der Lagerbrücken zumindest teilweise ummanteln. Durch die abgewinkelt zueinander ausgerichteten Flächen kann das Verbindungselement bei geringer Wandstärke eine vergleichsweise große Steifigkeit aufweisen, was insbesondere für die Lagerung der Nockenwelle von großem Vorteil ist.

Alternativ hierzu können auch zumindest zwei, vorzugsweise drei oder mehr, schienenartige Verbindungselemente vorgesehen sein, die die einzelnen Lagerbrücken leiterartig verbinden, wobei die Verbindungselemente die Stege der Leiter und die Lagerbrücken die Sprossen der Leiter darstellen. Wiederum alternativ hierzu ist auch vorstellbar, dass das Verbindungselement an sich eine gitterartige Struktur mit Längs- und Querstegen aufweist und dadurch bereits eine rahmenartige Gestalt besitzt, die eine äußerst hohe Steifigkeit aufweist.

Bei einer weiteren vorteilhaften Ausführungsform der erfindungsgemäßen Lösung weist die Zylinderkopfhaube zumindest eine Dichtkontur auf. Eine derartige Dichtkontur kann bspw. an einem dem Zylinderkopf zugewandten Rand angeordnet sein, über welchen die Zylinderkopfhaube gegenüber dem Zylinderkopf abgedichtet wird. Die Dichtkontur kann dabei bereits während des Kunststoffspritzgießvorgangs mit hergestellt oder anschließend angespritzt werden. Die Dichtkontur kann im einfachsten Fall eine Dichtfläche sein.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine Schnittdarstellung durch eine erfindungsgemäße Zylinderkopfhaube,
- Fig. 2a bis 2e: jeweils vier Lagerbrücken zur Lagerung von zwei nicht gezeigten Nockenwellen mit unterschiedlichen Verbindungselementen,
- Fig. 3: eine weitere mögliche Ausführungsform einer erfindungsgemäßen Zylinderkopfhaube.

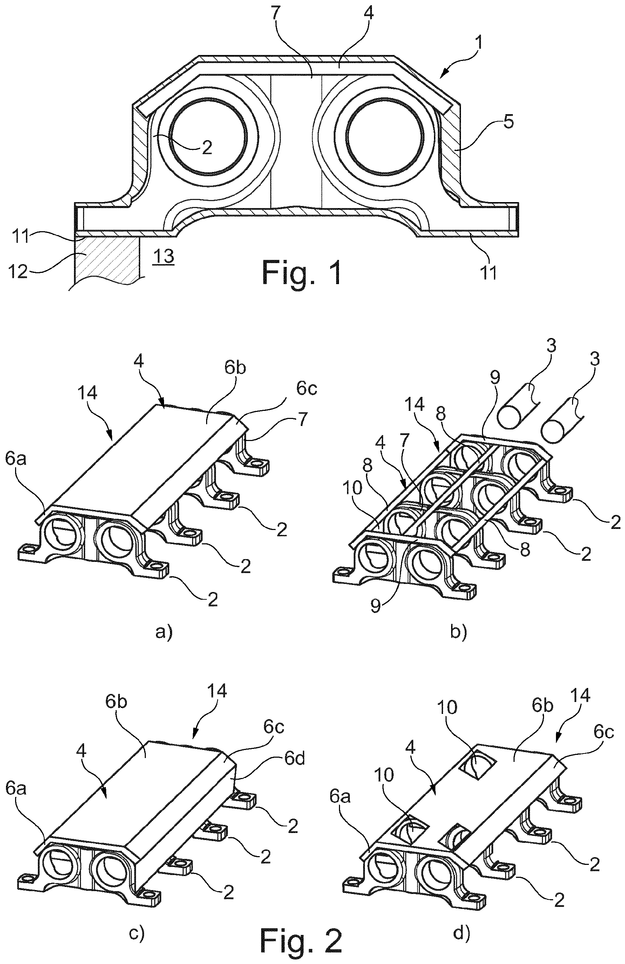

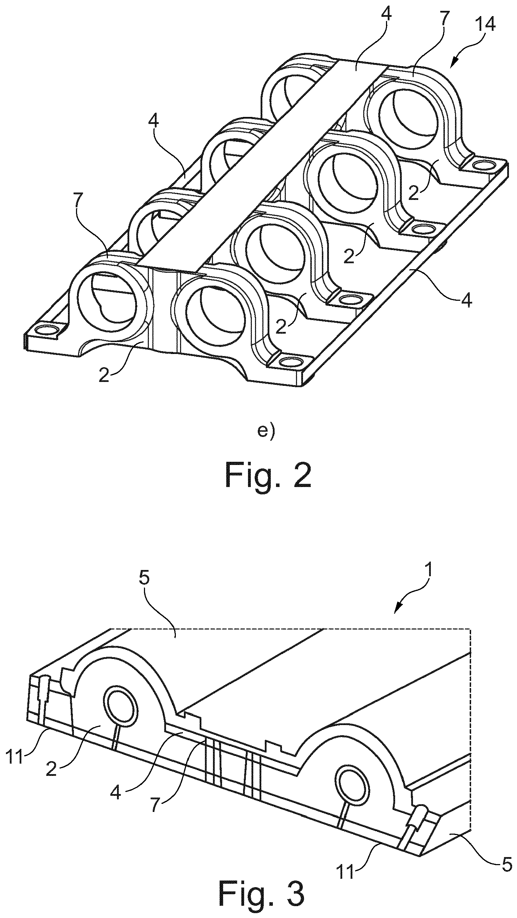

Entsprechend den Fig. 1 bis 3 weist eine erfindungsgemäße Zylinderkopfhaube 1 zumindest zwei metallische Lagerbrücken 2 zum Lagern zumindest einer, hier jeweils von zwei Nockenwellen 3 (vgl. Fig. 2b) auf, sowie zumindest ein metallisches Verbindungselement 4, welches fest mit den zumindest zwei Lagerbrücken 2, hier fest mit den jeweils insgesamt vier Lagerbrücken 2, verbunden ist, wobei die Lagerbrücken 2 über das zumindest eine Verbindungselement 4 zueinander ausgerichtet und aneinander fixiert sind. Wie in den Fig. 1 bis 3 weiter zu erkennen ist, sind die zumindest zwei Lagerbrücken 2 und das zumindest eine Verbindungselement 4 zumindest teilweise mit Kunststoff 5 umspritzt und dadurch die Zylinderkopfhaube 1 hergestellt.

Betrachtet man die unterschiedlichen Ausführungsformen der einzelnen Verbindungselemente 4 gemäß den Fig. 2a bis 2e, so kann man in Fig. 2a ein Verbindungselement 4 erkennen, welches insgesamt drei zueinander abgewinkelte Flächen 6a, 6b und 6c aufweist, die einen jeweiligen Lagerrücken 7 der einzelnen Lagerbrücken 2 zumindest teilweise ummanteln. Gemäß der Fig. 1 ist das gemäß der Fig. 2a dargestellte Verbindungselement 4 noch in einer Frontalansicht gezeigt.

Betrachtet man das Verbindungselement 4 gemäß der Fig. 2b, so kann man erkennen, dass dies in der dort gewählten Darstellung eine gitterartige Struktur mit Längsstegen 8 und Querstegen 9 aufweist. Über diese gitterartige Struktur kann ähnlich wie über die Struktur mit mehreren zueinander abgewinkelten Flächen 6a, 6b, 6c ein vergleichsweise steifes Verbindungselement 4 geschaffen werden, welches jedoch hinsichtlich seines Ressourcenverbrauchs und auch hinsichtlich seines Gewichtes vorteilhaft ist. Zusätzlich besitzt der Einsatz von Kunststoff 5 den großen Vorteil, dass die Zylinderkopfhaube 1 insgesamt eine dämpfende, insbesondere eine schwingungsdämpfende Außenhülle bekommt und dadurch einen gewissen dämpfenden Effekt erzielt.

Entsprechend der Fig. 2c ist ein Verbindungselement 4 gezeigt, welches zusätzlich zu dem gemäß der Fig. 2a dargestellten Verbindungselement 4 noch eine weitere Fläche 6d aufweist, wodurch die Steifigkeit weiter erhöht werden kann. Das Verbindungselement 4 kann in diesem Fall flächig am Lagerrücken 7 der einzelnen Lagerbrücken 2 anliegen oder aber auch lediglich punktuell bzw. linienförmig dort befestigt werden. Darüber hinaus ist es möglich, dass das zumindest eine Verbindungselement 4 zumindest eine Öffnung 10 (vgl. Fig. 2d) aufweist, insbesondere eine Öleinfüllöffnung oder eine Einschrauböffnung zum Befestigen von Anbauaggregaten, wie bspw. Sensoren, wodurch nicht nur eine Gewichtseinsparung, sondern zusätzlich auch eine individuelle Anpassung an unterschiedlichste gewünschte Zylinderkopfhauben 1 möglich ist. Wiederum alternativ können auch zumindest zwei, vorzugsweise drei, schienenartige Verbindungselemente 4 (vgl. 2e) vorgesehen sein, die die einzelnen Lagerbrücken 2 in der Art von Längsstegen miteinander verbinden.

Unabhängig von der gewählten Ausführungsform der Verbindungselemente 4 sind diese mit den zumindest zwei Lagerbrücken 2 verschweißt, verlötet, verschraubt, vernietet, verklebt oder über eine Formschlussverbindung miteinander verbunden. Eine derartige Formschlussverbindung kann bspw. durch ein Verbindungselement 4 erreicht werden, wie dies in Fig. 1 dargestellt ist. Selbstverständlich ist auch eine Verbindung über Zapfen oder Bolzen denkbar.

In fertig gestelltem Zustand weist die Zylinderkopfhaube 1 zumindest eine Dichtkontur 11, bspw. eine Dichtfläche, auf, wie diese in den Fig. 1 und 3 dargestellt ist. Über eine solche Dichtkontur 11 kann die Zylinderkopfhaube 1 mit einem Zylinderkopf 12 (vgl. Fig. 1) einer Brennkraftmaschine 13 verbunden werden. Eine derartige Dichtkontur 11 kann bspw. zusammen mit dem Umspritzen mit Kunststoff 5 in einem einzigen Kunststoffspritzgießvorgang hergestellt werden oder aber nachträglich an die bereits fertiggestellte Zylinderkopfhaube 1 angespritzt werden.

Hergestellt wird die erfindungsgemäße Zylinderkopfhaube 1 wie folgt: Zunächst werden zumindest zwei metallische Lagerbrücken 2 zum Lagern zumindest einer Nockenwelle 3 zueinander ausgerichtet und anschließend über zumindest ein metallisches Verbindungselement 4 fest miteinander verbunden, so dass die ausgerichteten Lagerbrücken 2 in ihrer Relativlage zueinander fixiert werden. Anschließend wird ein die zumindest zwei Lagerbrücken 2 und das zumindest eine Verbindungselement 4 umfassender Lagerrahmen 14 mit Kunststoff 5 zumindest teilweise umspritzt, insbesondere in einem Kunststoffspritzgießwerkzeug. Durch eine Anpassung des Kunststoffspritzgießwerkzeugs lassen sich dabei unterschiedliche Optiken und auch unterschiedliche Außengeometrien der Zylinderkopfhaube 1 vergleichsweise einfach herstellen, insbesondere bspw. im Hinblick auf ein Logo.

Insgesamt lässt sich somit die erfindungsgemäße Zylinderkopfhaube 1 vergleichsweise einfach und kostengünstig aber dennoch äußerst flexibel herstellen.

Nach dem Umspritzen des Lagerrahmens 14 zumindest teilweise mit Kunststoff 5 und damit nach dem Herstellen der eigentlichen Zylinderkopfhaube 1 können selbstverständlich weitere Anbauteile, wie bspw. Aktuatoren, Sensoren oder Ähnliches, angebaut werden. Das insbesondere als Blechstreifen ausgebildete zumindest eine Verbindungselement 4 kann dabei bspw. eine Blechstärke von 3 - 4 mm aufweisen, wobei je nach Ausführungsform das Verbindungselement 4 eine größere oder kleinere Blechstärke aufweisen muss. Bei einem gemäß den Fig. 2a und 2c dargestellten Verbindungselement 4 kann aufgrund der mehreren abgewinkelt zueinander angeordneten Flächen 6a bis 6d eine geringere Blechstärke gewählt werden, da die Kontur an sich bereits eine hohe Steifigkeit aufweist. Die Verbindung zwischen dem zumindest einen Verbindungselement 4 und den zumindest zwei Lagerbrücken 2 kann selbstverständlich über ein Punkt- oder Laserschweißen, aber auch über ein Löten, Clinchen, Durchsetzfügen, Prägen oder Tiefziehen erfolgen. Auch ein Verstiften ist möglich.

Durch die erfindungsgemäße Zylinderkopfhaube 1 lassen sich folgende Vorteile erzielen:
- Erhöhung der Steifigkeit des Gesamtmoduls,
- Reduzierung des Gesamtgewichts durch Kunststoffbereiche,
- Verbesserung des Dämpfungsverhaltens durch Einsatz von Kunststoff 5,
- Vereinfachung der Zylinderkopfmontage durch die Zylinderkopfhaube 1 inklusive Nockenwellen 3,
- zusätzliche Erhöhung der Steifigkeit durch geprägte Metallskelettstrukturen,
- Einbindung von Zusatzaggregaten und Anbauteilen in Öffnungen 10 möglich.

## Patentansprüche

1. Verfahren zur Herstellung einer Zylinderkopfhaube (1), bei dem
- zumindest zwei metallische Lagerbrücken (2) zum Lagern zumindest einer Nockenwelle (3) bereitgestellt und zueinander ausgerichtet werden,
- zumindest ein metallisches Verbindungselement (4) fest mit den zumindest zwei Lagerbrücken (2) verbunden wird, so dass die ausgerichteten Lagerbrücken (2) in ausgerichtetem Zustand zueinander fixiert sind,
- die zumindest zwei Lagerbrücken (2) und das zumindest eine Verbindungselement (4) zumindest teilweise mit Kunststoff (5) umspritzt und dadurch die Zylinderkopfhaube (1) hergestellt wird.

2. Verfahren nach Anspruch 1,
**dadurch gekennzeichnet,**
**dass** das zumindest eine Verbindungselement (4) mit einer jeweiligen Außenfläche der zumindest zwei Lagerbrücken (2) verbunden wird.

3. Verfahren nach Anspruch 1 oder 2,
**dadurch gekennzeichnet,**
**dass** das zumindest eine Verbindungselement (4) und die zumindest zwei Lagerbrücken (2) miteinander verschweißt, verlötet, verschraubt, vernietet, verklebt, verstiftet oder über eine Formschlussverbindung miteinander verbunden werden.

4. Verfahren nach einem der Ansprüche 1 bis 3,
**dadurch gekennzeichnet,**
**dass** in das zumindest eine Verbindungselement (4) zumindest eine Öffnung (10), insbesondere eine Öleinfüllöffnung oder eine Einschrauböffnung zum Befestigen von Anbauaggregaten, eingebracht wird.

5. Zylinderkopfhaube (1), hergestellt nach dem Verfahren nach einem der vorhergehenden Ansprüche.

6. Zylinderkopfhaube nach Anspruch 5,
**dadurch gekennzeichnet,**
**dass** das zumindest eine Verbindungelement (4) eine plattenartige Gestalt aufweist und auf einem Rücken (7) der Lagerbrücken (2) auffliegt.

7. Zylinderkopfhaube nach Anspruch 5,
**dadurch gekennzeichnet,**
**dass** das zumindest eine Verbindungelement (4) zumindest zwei zueinander abgewinkelte Flächen (6a, 6b, 6c, 6d) aufweist, die die Rücken (7) der Lagerbrücken (2) zumindest teilweise ummanteln.

8. Zylinderkopfhaube nach Anspruch 5,
**dadurch gekennzeichnet,**
**dass** zumindest zwei, vorzugsweise drei, schienenartige Verbindungelemente (4) vorgesehen sind.

9. Zylinderkopfhaube nach Anspruch 5,
**dadurch gekennzeichnet,**
**dass** das Verbindungselement (4) eine gitterartige Struktur mit Längs- und Querstegen (8,9) aufweist.

10. Zylinderkopfhaube nach einem der Ansprüche 5 bis 9,
**dadurch gekennzeichnet,**
**dass** die Zylinderkopfhaube (1) zumindest eine Dichtkontur (11) aufweist.
